# EUROPEAN PATENT SPECIFICATION

(11) **EP 3 551 921 B1**
(45) Date of publication and mention of the grant of the patent: **26.05.2021**
(21) Application number: 17822784.9
(22) Date of filing: 04.12.2017
(51) Int. Cl.: F16L 37/098, F24D 3/10

(54) **IMPROVED PIPE FITTING FOR EXPANSION TANKS**
VERBESSERTE ROHRKUPPLUNG FÜR AUSDEHNUNGSBEHÄLTER
RACCORD DE TUYAU AMÉLIORÉ DESTINÉ À DES RÉSERVOIRS D'EXPANSION

(30) Priority: 12.12.2016 IT 201600125230
(43) Date of publication of application: 16.10.2019
(73) Proprietor: Zilmet S.p.A., 35010 Limena (Padova) (IT)
(72) Inventor: BENETTOLO, Riccardo, 35010 Limena (PD) (IT)
(74) Representative: Vinci, Marcello
(86) International application number: PCT/IB2017/057608
(87) International publication number: WO 2018/109609

(56) References cited:
- EP-A1- 0 779 477
- DE-A1- 19 740 674
- US-A- 4 128 264
- US-A1- 2003 034 465

## Description

The present patent concerns expansion tanks, and in particular it concerns a new improved pipe fitting for expansion tanks.

Expansion tanks are hydraulic components which are commonly present in boilers for domestic heating, in heating systems and in water supply systems, in which they serve the function of compensating for any volume variation produced by fluid temperature variations in the circuit, thus avoiding dangerous pressure increases in the system itself, which otherwise would be absorbed by the piping and other components of the system. Expansion tanks are commonly present also in pumping systems and fluid rising systems, in which they serve the function of accumulating the fluid of the circuit in order to successively allow it to return into the circuit itself.

Expansion tanks also serve to protect systems from sudden pressure variations due to instant interruptions of the flow, with the consequent generation and propagation of water hammering.

Expansion tanks are known which comprise two rigid dome-shaped half shells, usually made of a metallic material, opposite and joined to each other in such a way as to form a closed casing.

Inside the tank there is a membrane which subdivides its internal space into two distinct compartments respectively intended to contain the compressible gas which serves to compensate for the increase in the volume of the system fluid and the incompressible fluid which is subject to volume variations.

The half shell intended to contain the fluid of the system is provided with a pipe fitting which communicates with the inner compartment and is suited to connect the compartment itself to the hydraulic circuit.

The other one of the two half shells, instead, is provided with a valve holder with a preload valve for adjusting the gas pressure.

Said half shells of the expansion tanks known in the art are usually made of a metallic material, typically stainless steel, and they can even be internally covered with polymeric materials.

Said pipe fitting is generally constituted by an axially holed cylindrical body, wherein the diameter of the axial hole determines the useful diameter of the passage through which the liquid flows.

Said cylindrical body comprises a first end intended to be constrained to the respective half shell at the level of a hole made in the half shell itself.

For example, said first end comprises an annular portion constrained in any way to the inside of the half shell, typically through a welding operation.

Said cylindrical body comprises a second end opposite said first end and suitable for connection to a pipe belonging to the hydraulic system.

For example, said second end is threaded so that a duct, or a further threaded element for connection with the duct, can be screwed therein.

Otherwise, said second end is especially shaped so that it can become engaged with a duct or with a further element for connection with the duct.

The shape and size of said second end depend on the type of duct to be connected or on the type of pipe fitting used.

The production of the expansion tank is therefore necessarily diversified according to the type of hydraulic system in which the expansion tank is going to be installed. Consequently, the number of pieces to be produced depends on the needs, which prevents the production process of expansion tanks from being optimized.

The patent document DE19740674 concerns an expansion tank in which the pipe fitting comprises an external portion integral with the wall of the expansion tank and an internal cylindrical portion simply inserted and constrained into the cylindrical hole provided in the external portion and projecting from the latter with an externally threaded end. The internal portion is made of a metallic material, while the external portion is made of plastic. The two portions are therefore joined by means of bonding agents.

The patent document EP0779477 concerns an expansion tank in which the pipe fitting is made up of various parts, and wherein the most external part comprises a pair of ducts suited to separately convey the inbound and the outbound flow. The most internal component comprises an external flange and some projections intended to separate the duct of the expansion tank into two separate ducts, respectively for the inbound and the outbound flows. Inside the expansion tank there is a further internal element which in turn is made up of two plastic portions: a main portion resting on the internal wall of the expansion tank and a wall. The pipe fitting is thus made up of at least four parts.

None of the documents mentioned above solves the technical problem of providing a pipe fitting which can be easily adapted to the type of duct to be connected to the expansion tank.

The subject of the present patent is a new type of improved modular pipe fitting.

It is the main object of the present invention to resolve the drawbacks of the pipe fittings presently known in the art, in order to allow the new pipe fitting to be adapted to the type of duct to be connected.

It is another object of the present invention to optimize production by developing a production process of the expansion tank which is independent of the type of hydraulic connection to be obtained.

These and other direct and complementary objects are achieved by the new type of improved modular pipe fitting, which in its main parts comprises:
a first coupling body suited to be permanently constrained to the half shell of the expansion tank, and a second adapter body suited to be permanently constrained to said coupling body once the latter has been mounted on said expansion tank, and wherein said second adapter body is suitable for the direct or indirect connection to a duct of a hydraulic system.

Said coupling body is conveniently made of a metallic material and is suited to be welded in any way to the half shell of the expansion tank.

Said adapter body, instead, is made of a plastic or metallic material.

Said first coupling body is substantially cylindrical and axially holed, with a first end suited to be constrained into the hole provided in the half shell of an expansion tank.

For example, said end comprises a radial annular edge suited to be welded on the inside or the outside of the edge of the hole provided in the half shell.

Said adapter body is substantially cylindrical and provided with an axial through hole, and it comprises a first engagement portion suited to be inserted and constrained into said axial through hole provided in said coupling body, and a second connecting portion.

Said engagement portion is provided with fixing means suited to fix it to said coupling body. In particular, said adapter body is suited to be constrained to said coupling body in such a way as to prevent it from coming off and from rotating with respect to the coupling body.

Said connecting portion of said adapter body comprises variously shaped parts suitable for the direct or indirect connection with the duct of the hydraulic system in which the expansion tank will be installed.

The assembly of the new pipe fitting includes the step of mounting said coupling body on the half shell of the expansion tank.

Said first coupling body is welded to the inside or to the outside of the edge of the hole provided in the half shell.

Once said coupling body has been constrained to the respective half shell, it is also possible to complete the production and assembly of the expansion tank.

Said adapter body, instead, can be the last to be assembled, through its insertion and engagement into said coupling body. In this way, the coupling body and the expansion tank can have standard sizes and their production process is optimized independently of the type of hydraulic system in which the expansion tank will be installed and of the type of duct to which the expansion tank will be connected.

The adapter body, instead, is produced according to the users' requests, and can be assembled onto said coupling body before delivery to the user.

In particular, said engagement portion is a standard element suited to be engaged into the coupling body, while said connecting portion is shaped and sized according to the needs. Said coupling body and said adapter body are tightly assembled together, for example through the interposition of an O-ring between said coupling body and said adapter body. The characteristics of the new pipe fitting will be highlighted in greater detail in the following description, making reference to the drawings which are attached hereto by way of non-limiting example.
Figure 1 shows a cross-sectional view of the new pipe fitting (10), completely assembled and constrained to a half shell (A) of an expansion tank.
Figure 2 shows a cross-sectional view of the new pipe fitting (10) in its separate parts (20, 30).
Figure 3 shows a cross-sectional view of the new pipe fitting (10) in its separate parts (20, 30'), wherein the adapter body (30') is made with a connecting portion (34') shaped in a different manner.

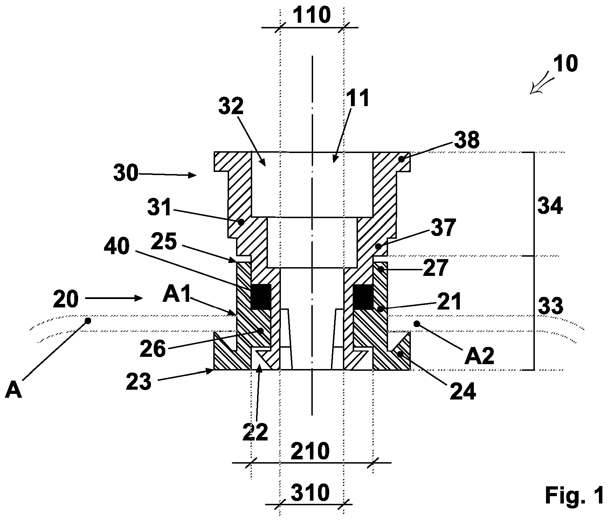

The improved pipe fitting (10) which is the subject of the present patent is suited to be used in an expansion tank consisting of two half shells. In Figure 1 a part of the half shell (A) to which said pipe fitting (10) is constrained is represented with broken lines.

The new pipe fitting (10) comprises a first coupling body (20) suited to be permanently constrained to the half shell (A) of the expansion tank, as well as a second adapter body (30) suitable for the direct or indirect connection with a duct of a hydraulic system.

Said adapter body (30) is suited to be permanently constrained to said first coupling body (20) once said coupling body (20) has been mounted on said half shell (A) of the expansion tank.

Said coupling body (20) comprises a substantially cylindricaal body (21) provided with an axial hole (22).

Said coupling body (20) comprises a first end (23) suited to be constrained to the hole (A1) provided in the half shell (A) of an expansion tank, and a second opposite open end (25) suitable for the insertion of said adapter body (30).

In the example illustrated in Figure 1, said first end (23) is inserted in said hole (A1) provided in the half shell (A).

Said first end (23) comprises at least one flange or radial annular edge (24) which is suited to be welded to the inside or the outside of the edge (A2) of the hole (A1) provided in the half shell (A).

As shown in Figure 1, with the coupling body (20) welded to the half shell (A), a part of said coupling body (20) projects from the hole (A1) provided in the half shell (A), in such a way that its end (25) can be accessed for the insertion of said adapter body (30).

Said adapter body (30) comprises a substantially cylindrical body (31) provided with a through axial hole (32) and comprising an engagement portion (33) suited to be inserted in said through axial hole (22) provided in said coupling body (20), as well as a connecting portion (34) suitable for connection with the hydraulic system.

The insertion of said adapter body (30) in said coupling body (20) forms the axial hole (11) of the pipe fitting (10), which places the outside of the expansion tank in communication with the inside of the same.

The useful diameter (110) of said axial hole (11) of the pipe fitting (10) is the useful diameter for the passage of the liquid.

In particular, said useful diameter (110) of the axial hole (11) provided in the pipe fitting (10) coincides with the diameter (310) of said axial hole (32) provided in said adapter body (30). Therefore, the diameter (210) of said coupling body (20) is larger than said useful diameter (110), since it has to allow for the insertion of said adapter body (30). Said engagement portion (33) of said adapter body (30) is provided with flexible tabs (35) arranged longitudinally, that is, in the axial direction, and provided with radial locking teeth (36) suited to interfere with correspondingly shaped portions located inside said axial hole (22) of said coupling body (20).

For example, inside said axial hole (22) of said coupling body (20) there is an annular projection (26) which protrudes towards the inside of the hole itself (22) and is intended to be coupled with said teeth (36) of the adapter body (30).

Said connecting portion (34) comprises shaped parts (38) for the direct or indirect connection with the hydraulic system in which the expansion tank will be installed.

Said open end (25) of said coupling body (20), through which said adapter body (30) is inserted, is preferably provided with longitudinal anti-rotational projections or tabs (27), suited to be engaged in corresponding seats created in a corresponding portion of said adapter body (30), for example in an annular projection (37) created on said cylindrical body (31).

Said coupling body (20) and said adapter body (30), once assembled together, are tight, for example owing to the interposition of an O ring (40) between said coupling body (20) and said adapter body (30).

For example, said O ring (40) is arranged between said annular projection (26) inside the axial hole (22) provided in said coupling body (20) and an annular projection (39) created on said engagement portion (33) of said adapter body (30).

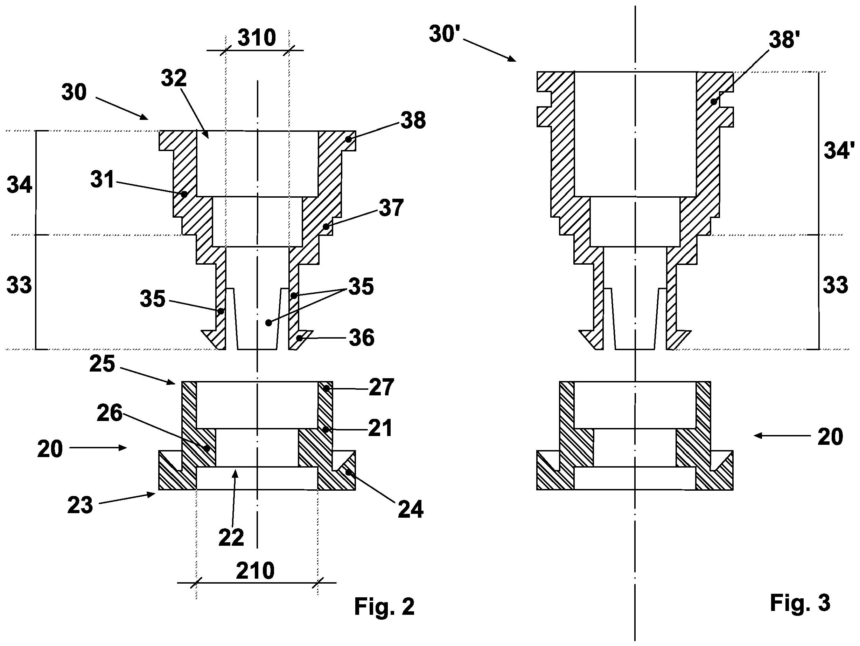

In the example illustrated in Figure 3, said adapter body (30') comprises a connecting portion (34') shaped in a different manner, for example longer and provided with specifically shaped parts (38').

Therefore, with reference to the above description and the attached drawings, the following claims are expressed.

## Claims

1. Pipe fitting (10) for expansion tanks, suitable for the direct or indirect hydraulic connection with at least one duct of a hydraulic system, said pipe fitting (10) being made up of the following:
- a half shell (A) of an expansion tank;
- a first coupling body (20) permanently constrained to said half shell (A) of an expansion tank and comprising a substantially cylindrical body (21) provided with an axial hole (22);
- a second adapter body (30) permanently constrained to said coupling body (20) which in turn is mounted on said half shell (A),
and wherein said second adapter body (30) is suitable for the direct or indirect connection with a duct of a hydraulic system,
wherein
said coupling body (20) is made of a metallic material and is
welded in any way to the half shell (A) of the expansion tank, while said adapter body (30) is made of a plastic or metallic material, and wherein said adapter body (30, 30') comprises a substantially cylindrical body (31) provided with a through axial hole (32) and comprising a standard engagement portion (33) inserted in the axial hole (22) of said coupling body (20) thereby engaging said coupling body (20), the substantially cylindrical body (31) also comprising a connecting portion (34, 34') suited to be
connected to the hydraulic system, and wherein said connecting portion (34, 34') comprises shaped parts (38, 38') for the direct or indirect connection with the duct of the hydraulic system in which the expansion tank will be installed, said shaped parts (38, 38') being sized and shaped according to the duct to be connected.

2. Pipe fitting (10) according to claim 1, wherein said coupling body (20) comprises a substantially cylindrical body (21) which is holed axially (22) and has a first end (23) suited to be constrained to a hole (A1) of the half shell (A) of an expansion
tank, and a second opposite open end (25) suited to project from said hole (A1) for the insertion of said adapter body (30), and wherein said first end (23) comprises at least one radial annular edge (24) suited to be welded to the edge (A2) of the hole (A1) of the half shell (A).

3. Pipe fitting (10) according to claim 1, wherein the diameter (310) of said axial hole (32) of said adapter body (30, 30') is the useful diameter of the passage through which the liquid flows.

4. Pipe fitting (10) according to claim 1, wherein said engagement portion (33) of said adapter body (30) and said coupling body (20) comprise mutual constraining means (35, 36, 37, 26, 17) suited to prevent the withdrawal and the relative rotation between said adapter body (30) and said coupling body (20).

5. Pipe fitting (10) according to claim 4, wherein said engagement portion (33) of said adapter body (30) is equipped with longitudinal flexible tabs (35) provided with radial locking teeth (36) suited to interfere with parts or projections (26) located inside said axial hole (22) of said coupling body (20).

6. Pipe fitting (10) according to claim 4, wherein said open end (25) of said coupling body (20), through which said adapter body (30) is inserted, is provided with longitudinal anti-rotational projections or tabs (27) suited to be fitted in corresponding seats made in corresponding parts or projections (37) obtained in said adapter body (30).

7. Pipe fitting (10) according to any of the preceding claims, wherein said coupling body (20) and said adapter body (30) are assembled together in a tight manner.

## Patentansprüche

1. Rohrverschraubung (10) für Ausdehnungsgefäße, geeignet für die direkte oder indirekte hydraulische Verbindung mit wenigstens einer Leitung eines Hydrauliksystems, wobei die besagte Rohrverschraubung (10) aus Folgendem besteht:
- einer Halbschale (A) eines Ausdehnungsgefäßes;
- einem ersten Kupplungskörper (20), der permanent an der besagten Halbschale (A) eines Ausdehnungsgefäßes fixiert ist und einen im Wesentlichen zylindrischen Körper (21) mit einer axialen Bohrung (22) umfasst;
- einem zweiten Adapterkörper (30), der permanent an dem besagten Kupplungskörper (20) fixiert ist, welcher seinerseits an der besagten Halbschale (A) montiert ist;
und wobei der besagte zweite Adapterkörper (30) geeignet ist, direkt oder indirekt mit einer Leitung eines Hydrauliksystems verbunden zu werden, wobei der besagte Kupplungskörper (20) aus einem metallischen Material besteht und in jeglicher Weise an der Halbschale (A) des Ausdehnungsgefäßes angeschweißt ist, während der besagte Adapterkörper (30) aus Kunststoff oder aus einem metallischen Material gefertigt ist, und wobei der besagte Adapterkörper (30, 30') einen im Wesentlichen zylindrischen Körper (31) mit einer axialen Durchgangsbohrung (32) und einem Standard-Einrastbereich (33) umfasst, der in der axialen Bohrung (22) des besagten Kupplungskörpers (20) eingesetzt ist und dementsprechend in dem besagten Kupplungskörper (20) einrastet, wobei der im Wesentlichen zylindrische Körper (31) des Weiteren einen Verbindungsabschnitt (34, 34') umfasst, der dazu geeignet ist, mit dem Hydrauliksystem verbunden zu werden, und wobei der besagte Verbindungsabschnitt (34, 34') Formteile (38, 38') für die direkte oder indirekte Verbindung mit der Leitung des Hydrauliksystems, in dem das Ausdehnungsgefäß installiert wird, umfasst, wobei die besagten Formteile (38, 38') der anzuschließenden Leitung entsprechend dimensioniert und geformt sind.

2. Rohrverschraubung (10) nach Patentanspruch 1, wobei der besagte Kupplungskörper (20) einen im Wesentlichen zylindrischen Körper (21) umfasst, der axial gebohrt ist (22) und ein erstes Ende (23) aufweist, das dazu geeignet ist, an einer Bohrung (A1) der Halbschale (A) eines Ausdehnungsgefäßes fixiert zu werden, sowie ein zweites, entgegengesetztes offenes Ende (25), das dazu geeignet ist, aus der besagten Bohrung (A1) für den Einsatz des besagten Adapterkörpers (30) hervorzustehen, und wobei das besagte erste Ende (23) wenigstens eine radiale ringförmige Kante (24) umfasst, die dazu geeignet ist, an der Kante (A2) der Bohrung (A1) der Halbschale (A) angeschweißt zu werden.

3. Rohrverschraubung (10) nach Patentanspruch 1, wobei der Durchmesser (310) der besagten axialen Bohrung (32) des besagten Adapterkörpers (30, 30') der Nutzdurchmesser des Durchgangs, durch den die Flüssigkeit fließt, ist.

4. Rohrverschraubung (10) nach Patentanspruch 1, wobei der besagte Einrastbereich (33) des besagten Adapterkörpers (30) und der besagte Kupplungskörper (20) wechselseitige Befestigungsmittel (35, 36, 37, 26, 17) umfassen, die dazu geeignet sind, das Zurückziehen und die relative Drehung zwischen dem besagten Adapterkörper (30) und dem besagten Kupplungskörper (20) zu verhindern.

5. Rohrverschraubung (10) nach Patentanspruch 4, wobei der besagte Einrastbereich (33) des besagten Adapterkörpers (30) mit flexiblen, länglichen Krampen (35) versehen ist, die radiale Sperrzähne (36) aufweisen und dazu geeignet sind, mit in der besagten axialen Bohrung (22) des besagten Kupplungskörpers (20) befindlichen Teilen oder Vorsprüngen (26) zu interferieren.

6. Rohrverschraubung (10) nach Patentanspruch 4, wobei das besagte offene Ende (25) des besagten Kupplungskörpers (20), durch das der besagte Adapterkörper (30) eingesetzt ist, mit länglichen Antirotations-Vorsprüngen oder -Krampen (27) versehen ist, die dazu geeignet sind, in entsprechende Aufnahmen in entsprechenden Teilen oder Vorsprüngen (37) in dem besagten Adapterkörper (30) eingepasst zu werden.

7. Rohrverschraubung (10) nach einem jeden der vorstehenden Patentansprüche, wobei der besagte Kupplungskörper (20) und der besagte Adapterkörper (30) dicht zusammengebaut sind.

## Revendications

1. Raccord de tuyau (10) pour réservoirs d'expansion, indiqués pour le raccordement hydraulique direct ou indirect avec au moins un conduit d'un système hydraulique, ledit raccord de tuyau (10) étant constitué des éléments suivants :
- une demi-coque (A) d'un réservoir d'expansion ;
- un premier corps de raccordement (20) bloqué de manière permanente à ladite demi-coque (A) d'un réservoir d'expansion et comprenant un corps essentiellement cylindrique (21) pourvu d'un trou axial (22) ;
- un deuxième corps adaptateur (30) bloqué de manière permanente audit corps de raccordement (20) qui à son tour est monté sur ladite demi-coque (A),
et où ledit deuxième corps adaptateur (30) est indiqué pour le raccordement direct ou indirect avec un conduit dudit système hydraulique,
où ledit corps de raccordement (20) est réalisé en un matériau métallique et est soudé d'une quelconque manière à la demi-coque (A) du réservoir d'expansion, alors que ledit corps adaptateur (30) est réalisé en un matériau plastique ou métallique, et où ledit corps d'adaptateur (30, 30') comprend un corps essentiellement cylindrique (31) pourvu d'un trou axial passant (32) et comprenant une portion d'engagement standard (33) insérée dans le trou axial (22) dudit corps de raccordement (20) engageant ainsi ledit corps de raccordement (20), le corps essentiellement cylindrique (31) comprenant en outre une portion de raccordement (34, 34') indiquée pour être reliée su système hydraulique, et où ladite portion de raccordement (34, 34') comprend des parties galbées (38, 38') pour le raccordement direct ou indirect avec le conduit du système hydraulique dans lequel le réservoir d'expansion sera installé, lesdites parties galbées (38, 38') présentant des dimensions et des formes selon le conduit à relier.

2. Raccord de tuyau de (10) selon la revendication 1, où ledit corps de raccordement (20) comprend un corps essentiellement cylindrique (21) qui est troué de manière axiale (22) et présente une première extrémité (23) indiquée pour être bloquée dans un trou (A1) de la demi-coque (A) d'un réservoir d'expansion, et une deuxième extrémité ouverte opposée (25) indiquée pour saillir dudit trou (A1) pour l'introduction dudit corps d'adaptateur (30), et où ladite première extrémité (23) comprend au moins un bord annulaire radial (24) indiqué pour être soudé au bord (A2) du trou (A1) de la demi-coque (A).

3. Raccord de tuyau (10) selon la revendication 1, où le diamètre (310) dudit trou axial (32) dudit corps d'adaptateur (30, 30') est le diamètre utile pour le passage à travers lequel le liquide s'écoule.

4. Raccord de tuyau (10) selon la revendication 1, où ladite portion d'engagement (33) dudit corps d'adaptateur (30) et ledit corps de raccordement (20) comprennent des moyens de blocage réciproque (35, 36, 37, 26, 17) indiqués pour empêcher l'extraction et la relative rotation entre ledit corps d'adaptateur (30) et ledit corps de raccordement (20).

5. Raccord de tuyau (10) selon la revendication 4, où ladite portion d'engagement (33) dudit corps d'adaptateur (30) est dotée de languettes flexibles longitudinales (35) pourvues de dents de verrouillage radiales (36) indiquées pour interférer avec des parties ou saillies (26) disposées à l'intérieur dudit trou axial (22) dudit corps de raccordement (20).

6. Raccord de tuyau (10) selon la revendication 4, où ladite extrémité ouverte (25) dudit corps de raccordement (20), à travers lequel ledit corps d'adaptateur (30) est inséré, est doté de saillies ou languettes anti-rotation longitudinales (27) indiquées pour être engagées dans des sièges correspondants réalisés dans des parties ou languettes correspondantes (37) obtenues dans ledit corps d'adaptateur (30).

7. Raccord de tuyau (10) selon l'une quelconque des revendications précédentes, où ledit corps de raccordement (20) et ledit corps d'adaptateur (30) sont assemblés entre eux d'une manière étanche.
